(19) Europäisches Patentamt
European Patent Office
Office européen des brevets

(11) **EP 2 206 023 B1**

(12) **EUROPÄISCHE PATENTSCHRIFT**

(45) Veröffentlichungstag und Bekanntmachung des Hinweises auf die Patenterteilung:
**21.11.2012 Patentblatt 2012/47**

(21) Anmeldenummer: **08804868.1**

(22) Anmeldetag: **29.09.2008**

(51) Int Cl.:
*G05B 13/02* (2006.01)      *G06N 99/00* (2010.01)
*G06F 15/00* (2006.01)      *F23N 5/24* (2006.01)

(86) Internationale Anmeldenummer:
**PCT/EP2008/063009**

(87) Internationale Veröffentlichungsnummer:
**WO 2009/056416 (07.05.2009 Gazette 2009/19)**

(54) **VERFAHREN ZUR RECHNERGESTÜTZTEN EXPLORATION VON ZUSTÄNDEN EINES TECHNISCHEN SYSTEMS**

METHOD FOR THE COMPUTER-ASSISTED EXPLORATION OF STATES OF A TECHNICAL SYSTEM

PROCÉDÉ POUR L'EXPLORATION ASSISTÉE PAR ORDINATEUR DES ÉTATS D'UN SYSTÈME TECHNIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **31.10.2007   DE 102007052122**
       **06.02.2008   DE 102008007700**

(43) Veröffentlichungstag der Anmeldung:
**14.07.2010   Patentblatt 2010/28**

(73) Patentinhaber: **Siemens Aktiengesellschaft**
**80333 München (DE)**

(72) Erfinder:
• **HANS, Alexander**
  **80639 München (DE)**
• **UDLUFT, Steffen**
  **82223 Eichenau (DE)**
• **SCHNEEGASS, Daniel**
  **1019 HM Amsterdam (NL)**
• **SCHÄFER, Anton Maximilian**
  **80801 München (DE)**
• **STERZING, Volkmar**
  **85579 Neubiberg (DE)**

(56) Entgegenhaltungen:
EP-A- 1 016 981          US-A1- 2003 074 338
US-A1- 2006 195 409

• **ALEXANDER HANS, DANIEL SCHNEEGASS, ANTON MAXIMILIAN SCHAEFER, AND STEFFEN UDLUFT.: "Sichere Exploration für Reinforcement-Learning-basierte Regelung." 17. WORKSHOP COMPUTATIONAL INTELLIGENCE DES VDI/GMA-FA 5.14 "COMPUTATIONAL INTELLIGENCE" UND DER GI-FG "FUZZY-SYSTEME UND SOFT-COMPUTING" IN BOMMERHOLZ BEI DORTMUND, 6.-7. DEZ. 2007. UNIVERSITÄTSVERLAG KARLSRUHE, [Online] XP002517778 Gefunden im Internet: URL:http://www.inb.uni-luebeck.de:8084/~sc hneega/ sichere_exploration.pdf> [gefunden am 2009-03-03]**
• **ANTON MAXIMILIAN SCHAEFER ET AL: "A Neural Reinforcement Learning Approach to Gas Turbine Control" NEURAL NETWORKS, 2007. IJCNN 2007. INTERNATIONAL JOINT CONFERENCE ON, IEEE, PISCATAWAY, NJ, USA, 1. August 2007 (2007-08-01), Seiten 1691-1696, XP031154848 ISBN: 978-1-4244-1379-9**

**Beschreibung**

Die Erfindung betrifft ein Verfahren zur rechnergestützten Exploration von Zuständen eines technischen Systems sowie ein entsprechendes Computerprogrammprodukt.

Aus dem Stand der Technik sind verschiedene Verfahren bekannt, bei denen rechnergestützt das dynamische zeitliche Verhalten eines technischen Systems unter Berücksichtigung vorbestimmter Kriterien optimiert wird. Beispiele solcher Verfahren sind Lernverfahren, welche basierend auf bekannten Daten des technischen Systems eine optimierte Regelung des Systems lernen. Das technische System wird hierbei durch Zustände beschrieben, welche messbare Zustandsgrößen des technischen Systems darstellen, wie z.B. physikalische Größen, wie Druck, Temperatur, Leistung und dergleichen. Ferner sind in dem technischen System Aktionen definiert, welche die Veränderungen von bestimmten Stellgrößen am technischen System beschreiben, wie z.B. die Veränderung von Ventilstellungen, Erhöhung von Druck und dergleichen. Durch eine Aktion wird der Zustand eines technischen Systems in einen neuen Folgezustand überführt. Bekannte Lernverfahren lernen dabei eine optimale Aktionsauswahl-Regel, welche für jeden Zustand des technischen Systems die optimale Aktion zur Überführung des Systems in einen neuen Zustand festlegt. Jede Aktion wird hierbei beispielsweise durch eine Belohnung oder Bestrafung, insbesondere unter Einbeziehung einer Kostenfunktion, bewertet, wobei mit Hilfe der Bewertungen ein optimales dynamisches Verhalten des technischen Systems erzielt werden kann.

D2: Anton Maximilian Schaefer et al.: "A Neural Reinforcement Learning Approach to Gas Turbine Control", NEURAL NETWORKS, 2007. IJCNN 2007. INTERNATIONAL JOINT CONFERENCE ON, IEEE, Piscataway, NJ, USA, 1. August 2007 (2007-08-01), pages 1691-1696, offenbart ein RL-Verfahren (Reinforcement Learning), das verwendet wird, um eine Gasturbine zu steuern.

Grundlage zur geeigneten Bestimmung eines optimalen Verhaltens eines technischen Systems ist hierbei eine gute Datenbasis in der Form eines gut explorierten Zustandsraums des technischen Systems. Es muss somit eine Vielzahl von geeigneten Daten über das technische System in der Form von Zuständen, Aktionen und Folgezuständen vorliegen. Es besteht hierbei das Problem, dass bei der Exploration des Zustandsraums zur Ermittlung einer geeigneten Datenbasis Zustände eingenommen werden können, welche als unsicher einzustufen sind, d.h. welche unter Umständen unmittelbar bzw. mittelbar zu einer Beschädigung des technischen Systems bzw. zu dessen Fehlbetrieb führen können.

Aufgabe der Erfindung ist es deshalb, ein Verfahren zur rechnergestützten Exploration von Zuständen eines technischen Systems zu schaffen, mit dem das Einnehmen von unsicheren Zuständen vermieden wird und gleichzeitig der Zustandsraum so durchlaufen wird, dass eine gute Datenbasis für die Durchführung eines anschließenden Verfahrens zur Ermittlung einer optimalen Regelung des technischen Systems geschaffen wird.

Diese Aufgabe wird durch die unabhängigen Patentansprüche gelöst. Weiterbildungen der Erfindung sind in den abhängigen Ansprüchen definiert.

In dem erfindungsgemäßen Verfahren werden aufeinander folgend Zustände des technischen Systems durchlaufen, indem in einem jeweiligen Zustand des technischen Systems eine Aktion ausgeführt wird, welche zu einem neuen Zustand führt. Dabei werden eine Sicherheitsfunktion und eine Rückführungsregel verwendet. Mit Hilfe der Sicherheitsfunktion wird vor dem Ausführen von Aktionen, welche zu unbekannten, vormals noch nicht durchlaufenen Zuständen führen, bestimmt, ob die jeweilige Aktion eine zulässige oder unzulässige Aktion im technischen System ist, wobei die Aktion nur ausgeführt wird, wenn sie zulässig ist. Die Sicherheitsfunktion gewährleistet somit, dass unbekannte Zustände nur dann exploriert werden, wenn sie gemäß vorgegebenen Kriterien als sicher eingestuft werden. Neben einer Sicherheitsfunktion wird in dem erfindungsgemäßen Verfahren ferner eine Rückführungsregel verwendet, wobei bei Erreichen von unbekannten, vormals noch nicht durchlaufenen Zuständen des technischen Systems die nachfolgenden Aktionen basierend auf dieser Rückführungsregel ausgewählt werden. Die Rückführungsregel dient dazu, die Zustände des technischen Systems auf bekannte Zustände zurückzuführen. Mit dieser Rückführungsregel wird gewährleistet, dass die Zustände des technischen Systems von einem neuen unbekannten Zustand wieder zurück in einen bekannten Zustandsbereich laufen. Hierdurch wird vermieden, dass sich die Zustände des technischen Systems durch Aktionen in Zustandsgebiete bewegen, welche zu einer Beschädigung des technischen Systems führen können.

Das erfindungsgemäße Verfahren hat den Vorteil, dass durch die Verwendung einer Sicherheitsfunktion und einer Rückführungsregel geeignete Mechanismen bereitgestellt werden, mit denen eine umfassende Exploration des Zustandsraums erreicht wird, wobei die Gefahr, dass unzulässige Aktionen ausgeführt werden, weitestgehend vermieden wird.

In einer bevorzugten Ausführungsform des erfindungsgemäßen Verfahrens sind die unzulässigen Aktionen derart charakterisiert, dass beim Ausführen einer unzulässigen Aktion das technische System mit einer Wahrscheinlichkeit von eins oder mit einer Wahrscheinlichkeit größer null in einen Zustand gelangt, der zu einem unerwünschten bzw. fehlerhaften Betriebszustand des technischen Systems entweder unmittelbar nach Ausführen der unzulässigen Aktion oder mittelbar nach Ausführen weiterer Aktionen führt. Ein unerwünschter bzw. fehlerhafter Betriebszustand ist dabei insbesondere ein Zustand, der eine Beschädigung bzw. eine Zerstörung des technischen Systems zur Folge hat.

In einer weiteren Ausführungsform des erfindungsgemäßen Verfahrens wird die Rückführungsregel auch dann angewendet, wenn in dem technischen System Zustände erreicht werden, bei denen eine auszuführende Aktion gemäß der Sicherheitsfunktion als unzulässig eingestuft wird. Hierdurch wird die sichere Exploration des Zustandsraums weiter verbessert.

In einer weiteren Ausführungsform werden die ausgeführten Aktionen jeweils in Abhängigkeit von dem Zustand, in dem die Aktion ausgeführt wird, und dem durch die Aktion erreichten neuen Zustand mit einer Bewertung bewertet, wobei diese Bewertungen insbesondere auch dazu verwendet werden, um nach der Exploration der Zustände ein Verfahren zur Regelung bzw. Steuerung des technischen Systems basierend auf den durchlaufenen Zuständen und den bewerteten Aktionen zu lernen. Vorzugsweise wird eine Aktion mit Hilfe dieser Bewertung auch als unzulässig kategorisiert, wobei Aktionen, deren Bewertungen kleiner als ein vorbestimmter Wert sind, als unzulässig eingestuft werden.

In einer weiteren Ausgestaltung des erfindungsgemäßen Verfahrens wird auch die Sicherheitsfunktion basierend auf den ermittelten Bewertungen der Aktionen gelernt. Vorzugsweise werden dabei durchlaufenen Paaren aus Zustand und in dem Zustand ausgeführter Aktionen jeweils die minimale Bewertung zugewiesen, welche nach dem Ausführen der Aktion und beim anschließenden Durchlaufen der Rückführungsregel für eine Aktion auftritt, wobei basierend auf der minimalen Bewertung die Sicherheitsfunktion bestimmt wird und wobei die Sicherheitsfunktion eine unzulässige Aktion dann feststellt, wenn die minimale Bewertung kleiner als ein vorbestimmter Wert ist. Hierdurch wird in geeigneter Weise sichergestellt, dass in einem Zustand ausgeführte Aktionen weder unmittelbar noch mittelbar zu einem unerwünschten bzw. fehlerhaften Betriebszustand des technischen Systems führen.

Die Sicherheitsfunktion wird in einer bevorzugten Variante der Erfindung mit einem Funktionsapproximator bestimmt, der die minimalen Bewertungen basierend auf einer lokalen Extrapolation um den gerade mit einer Aktion zu verändernden Zustand approximiert. Insbesondere führt der Funktionsapproximator eine lokal-lineare und/oder lokal-quadratische Extrapolation durch.

Die gemäß der Erfindung verwendete Rückführungsregel kann in einer Ausführungsform eine für das technische System vorgegebene Regel sein. Insbesondere kann die Rückführungsregel auf einem bereits vorhandenen Regler des technischen Systems basieren.

Anstatt bzw. zusätzlich zu einer vorgegebenen Regel kann die Rückführungsregel auch mit einem bestärkenden, die Bewertungen der Aktionen berücksichtigenden Lernverfahren bestimmt werden. Das bestärkende Lernverfahren basiert dabei vorzugsweise auf einem Optimalitätskriterium, gemäß dem das Minimum des Erwartungswerts aller zukünftigen Bewertungen maximiert wird. Auf diese Weise wird sichergestellt, dass mit der Rückführungsregel schnell zu den Zuständen zurückgegangen wird, welche bekannt und sicher sind.

Um eine im Wesentlichen vollständige Exploration von Zuständen durch Ausführen aller möglichen Aktionen in den Zuständen zu erreichen, werden in einer besonders bevorzugten Ausführungsform den Zuständen bei deren Durchlaufen aufeinander folgende Kategorien wie folgt zugewiesen:

i) Falls die Zustände basierend auf der Rückführungsregel verändert werden, wird einem durch eine Aktion erreichten unbekannten, vormals noch nicht durchlaufenen Zustand die Kategorie zugeordnet, welche dem Zustand vor dem Durchführen der Aktion zugeordnet ist.
ii) In allen anderen Fällen wird einem durch eine Aktion erreichten unbekannten, vormals noch nicht durchlaufenen Zustand eine Kategorie zugeordnet, welche der Kategorie folgt, die dem Zustand vor dem Durchführen der Aktion zugeordnet ist.

Die Zustände werden vorzugsweise nach Kategorien derart durchlaufen, dass in einer Kategorie zunächst alle möglichen auszuführenden Aktionen exploriert werden und anschließend zur nächsten Kategorie übergegangen wird. Der Begriff "Explorieren einer Aktion" bedeutet hierbei, dass die Aktion entweder ausgeführt oder als unzulässig eingestuft wird.

In einer bevorzugten Ausführungsform wird bei der Verwendung von Kategorien ein graph-basiertes Wegfindungs-Verfahren zum Durchlaufen der Zustände und möglichen Aktionen verwendet. Bei diesem Verfahren wird während des Durchlaufens der Zustände ein Graph aufgebaut, dessen Knoten den durchlaufenen Zuständen und dessen Kanten den ausgeführten Aktionen entsprechen und in welchem für jeden Knoten die Kategorie des entsprechenden Zustands hinterlegt ist, wobei bei Erreichen eines Zustands, in dem bereits alle möglichen Aktionen exploriert, d.h. ausgeführt und/oder mit der Sicherheitsfunktion als unzulässig eingestuft wurden, in dem Graphen nach einem Weg zu einem Zustand in der gleichen Kategorie gesucht wird, in dem noch Aktionen exploriert werden können, und bei Auffinden eines derartigen Wegs zu dem Zustand über diesen Weg gegangen wird. Im Falle, dass kein Weg zu einem Zustand in der gleichen Kategorie gefunden wird, in dem noch Aktionen exploriert werden können, werden die Zustände der darauffolgenden Kategorie durchlaufen.

Alternativ bzw. zusätzlich zu einem graph-basierten Wegfindungs-Verfahren kann auch ein bestärkendes Lernverfahren zur Wegfindung verwendet werden. Dabei werden die Zustände einer Kategorie mit dem bestärkenden Lernverfahren basierend auf einer Belohnungsfunktion durchlaufen, wobei gemäß der Belohnungsfunktion einer Aktion eine Belohnung zugewiesen wird, wenn sie zu einem Zustand in der gerade durchlaufenen Kategorie führt, in dem noch die Exploration zumindest einer Aktion möglich ist. Vorzugsweise wird in dem bestärkenden Lernverfahren eine Aktionsauswahl-Regel nach Durchlaufen einer vorbestimmten Anzahl an Zuständen aktualisiert, wobei bei der Aktualisierung die neu hinzukommenden Aktionen und der jeweilige Zustand, in dem die jeweilige neu hinzukommende Aktion ausgeführt wird, sowie der durch die Aktion erreichte neue Zustand berücksichtigt werden.

Um auch große Zustandsräume mit dem erfindungsgemäßen Verfahren zu verarbeiten, werden in einer bevorzugten Ausführungsform in dem graph-basierten Lernverfahren und/oder in dem bestärkenden Lernverfahren ähnliche Zustände des technischen Systems in gemeinsame Cluster zusammengefasst.

Bei der Verwendung von Kategorien wird die Rückführungsregel vorzugsweise nicht nur bei Erreichen von unbekannten Zuständen angewendet, sondern auch bei Erreichen von Zuständen einer auf die gerade zu durchlaufenden Kategorie folgende Kategorie. In einer weiteren Ausgestaltung werden die Zustände gemäß der Rückführungsregel so lange durchlaufen, bis ein Zustand der gerade zur durchlaufenden Kategorie erreicht ist.

Bei der Verwendung von Kategorien wird das Verfahren vorzugsweise derart initiiert, dass zunächst ohne Berücksichtigung der Sicherheitsfunktion die Zustände gemäß der Rückführungsregel durchlaufen werden und dabei den Zuständen die gleiche Kategorie zugeordnet wird, wobei die Zustände so lange durchlaufen werden, bis eine bestimmte Menge von Zuständen nicht mehr verlassen wird, und wobei anschließend unter Berücksichtigung der Sicherheitsfunktion zu einem unbekannten, vormals noch nicht durchlaufenen Zustand gegangen wird, wobei dieser Zustand der darauf folgenden Kategorie zugeordnet wird.

Das erfindungsgemäße Verfahren wird insbesondere im Realbetrieb des technischen Systems eingesetzt. Gegebenenfalls kann das Verfahren auch bei einer Simulation des Betriebs des technischen Systems verwendet werden.

In einer besonders bevorzugten Ausführungsform wird das Verfahren zur Exploration von Zuständen einer Gasturbine eingesetzt. Die Zustände der Gasturbine und/oder die den Zuständen zugeordneten Aktionen umfassen vorzugsweise eine oder mehrere der folgenden Größen:

Gesamtleistung der Gasturbine; Kraftstoffzufuhr zur Gasturbine; ein oder mehrere Drucke und/oder Temperaturen in der Gasturbine oder in der Umgebung der Gasturbine; das Brummen der Gasturbine; Brennkammerbeschleunigungen in der Gasturbine; einen oder mehrere Einstellparameter an der Gasturbine, insbesondere Ventileinstellungen und/oder Kraftstoffverhältnisse und/oder Einstellungen der Vorleitschaufeln.

Neben dem oben beschriebenen Verfahren umfasst die Erfindung ferner ein Computerprogrammprodukt mit einem auf einem maschinenlesbaren Träger gespeicherten Programmcode zur Durchführung des erfindungsgemäßen Verfahrens, wenn das Programm auf einem Rechner abläuft.

Ausführungsbeispiele der Erfindung werden nachfolgend anhand der beigefügten Figuren detailliert beschrieben.

Es zeigen:

Fig. 1 eine schematische Darstellung, welche mögliche Kombinationen von Ausführungsformen des erfindungsgemäßen Verfahrens verdeutlicht;

Fig. 2 eine dreidimensionale Darstellung einer Bewertungs-Funktion, welche zum Testen einer Ausführungsform des erfindungsgemäßen Verfahrens basierend auf einem Benchmark-Problem verwendet wird;

Fig. 3 ein Diagramm, welches das Lernen einer Backup-Policy gemäß einer Ausführungsform des erfindungsgemäßen Verfahrens verdeutlicht; und

Fig. 4 ein Diagramm, welches die Ergebnisse des erfindungsgemäßen Verfahrens basierend auf einem Benchmark-Problem verdeutlicht.

Die nachfolgend beschriebenen Ausführungsformen des erfindungsgemäßen Verfahrens betreffen die Exploration eines Zustandsraums aus einer Vielzahl von Zuständen eines technischen Systems, wobei basierend auf sog. Reinforcement-Learning anhand von vorgegebenen Zuständen eine optimale Aktionsauswahl-Regel gelernt werden soll. Gemäß dieser Regel wird bei der Simulation des Betriebs des technischen Systems oder im Realbetrieb in geeigneter Weise ausgehend von einem Zustand des technischen Systems eine optimale Aktion ausgewählt, welche zum nächsten Zustand des technischen Systems führt. Mit der Aktionsauswahl-Regel werden die Betriebszustände des technischen Systems gemäß vorgegebenen Kriterien optimal gewählt, beispielsweise können die Zustände so gewählt sein, dass der beste Wirkungsgrad des technischen Systems oder der geringste Verschleiß des technischen Systems auftritt.

In den hier beschriebenen Ausführungsformen wird die optimale Aktionsauswahl-Regel mit Hilfe einer sog. Reward-Funktion beschrieben, welche der ausgeführten Aktion in Abhängigkeit von dem Zustand, in dem die Aktion ausgeführt wird, sowie von dem daraus resultierenden Folgezustand einen Reward $R_{s,s'}^{a}$ zuweist, welcher einer Bewertung im Sinne der Ansprüche entspricht.

Reinforcement-Learning ist hinlänglich aus dem Stand der Technik bekannt und stellt einen Ansatz des maschinellen Lernens zur Lösung von Optimalsteuerungsproblemen dar. Wie bereits oben ausgeführt, wird mit diesem Reinforcement-Learning (im Folgenden auch als RL-Verfahren bezeichnet) eine Aktionsauswahlregel (im Folgenden auch als Policy bezeichnet) identifiziert, die einen sog. Agenten, der die Aktionen ausführt, optimal innerhalb einer vorgegebenen Umgebung steuert. In der hier beschriebenen Ausführungsform wird die Policy in einem Markov-Entscheidungsprozess definiert, welcher aus einem Zustandsraum S, einer Menge von Aktionen A und einer Dynamik besteht. Letztere ergibt sich aus den Transitionswahrscheinlichkeiten $P_{s,s'}^{a} : S \times A \times S \rightarrow [0,1]$ von dem aktuellen Zustand s zu dem neuen Folgezustand s' sowie der Aktion a, die zu dem Folgezustand s' führt. Bei jeder entsprechenden Transition erhält der Agent den bereits oben erwähnten Reward. Die Rewards folgen ebenfalls einer Verteilung und sind nur im Spezialfall deterministisch, so dass $R$ eine Funktion darstellt.

In der Regel ist man daran interessiert, die diskontierende Value Function

$$V^{\pi}(s) = \mathrm{E}_{s}^{\pi}\left( \sum_{i=0}^{\infty} \gamma^{i} R_{s^{(i)},s^{(i+1)}}^{\pi(s^{(i)})} \right)$$

mit dem Diskontierungsfaktor $0 < \gamma < 1$ für alle Zustände s über dem Policy-Raum $\pi \in \Pi, \pi: S \rightarrow A$ zu maximieren. Als Zwischenschritt verwendet man sog. Q-Funktionen

$$Q^{\pi}(s,a) = \mathrm{E}_{s'}^{\pi}\left( R_{s,s'}^{a} + \gamma Q^{\pi}(s', \pi(s')) \right),$$

die von Zustand und Aktion abhängen. Es wird hierbei $V^{*}=V^{\pi_{opt}}$ als die optimale Value Function definiert und entsprechend

$$Q*(s,a) = \mathrm{E}_{s'}\left( R_{s,s'}^{a} + \gamma V*(s') \right) = \mathrm{E}_{s'}\left( R_{s,s'}^{a} + \gamma \max_{a'} Q*(s',a') \right)$$

als die optimale Q-Funktion. Die vorangegangene Gleichung stellt die dem Fachmann bekannte Bellman-Optimalitäts-Gleichung dar, deren Lösung die optimale Policy $\pi(s)=\mathrm{argmax}_{a}Q*(s,a)$ liefert.

Die oben beschriebenen RL-Verfahren sind in der Lage, komplexe technische Anlagen, wie z.B. Gasturbinen, anhand einer vertretbaren Anzahl von Interaktionen zu optimieren. Zur Umsetzung der obigen RL-Verfahren ist es notwendig, dass zum Lernen des Verfahrens bereits eine vorbestimmte Menge an Datensätzen in der Form von Tupeln umfassend Zustand, Aktion, Folgezustand und Bewertung vorliegen, um basierend auf diesen Datensätzen das Lernen durchzuführen. Das erfindungsgemäße Verfahren beschäftigt sich damit, in geeigneter Weise Datensätze für dieses Lernen zu generieren, wobei diese Generierung durch eine Exploration des Zustandsraums der Zustände des technischen Systems durch Ausführen entsprechender Aktionen erreicht wird. Da bei der Exploration des Zustandraums die Eigenschaften des technischen Systems noch nicht bekannt sind, ist sicherzustellen, dass keine unzulässigen Aktionen ausgeführt werden, welche in dem technischen System unerwünscht sind und insbesondere zu einer Beschädigung des Systems führen können. Darüber hinaus sollte mit dem Explorations-Verfahren ein Durchlaufen des Zustandsraums ermöglicht werden, bei dem eine große Anzahl von sicheren Zuständen eingenommen wird, die nicht zur Beschädigung des technischen Systems führen. Die nachfolgend beschriebenen Ausführungsformen ermöglichen eine solche sichere Exploration des Zustandsraums eines technischen Systems.

Zwei wesentliche Bestandteile der nachfolgend beschriebenen Verfahren sind eine Sicherheitsfunktion und eine Backup-Policy. Die Sicherheitsfunktion hat die Aufgabe zu bestimmen, ob ein Zustands-Aktions-Paar sicher ist, während die Backup-Policy von kritischen oder unbekannten Zuständen in sichere und bereits bekannte zurückführen soll. Um diese beiden Komponenten zu verbinden, wird in der nachfolgend beschriebenen Ausführungsformen des erfindungsgemäßen Verfahrens ein sog. Level-basiertes Explorations-Schema verwendet, welche die Zustände in Levels einer Folge von aufeinander folgenden Levels einteilt.

Die in dem Verfahren verwendete Sicherheitsfunktion muss für ein Zustands-Aktions-Paar eine Aussage über ihren Sicherheitsstatus treffen, der sich in die Kategorien "sicher", "kritisch" und "überkritisch" einteilen lässt. Darüber hinaus kann eine Aktion in die Kategorien "fatal" und "nicht fatal" eingeteilt werden. Eine nicht fatale Aktion zum Übergang von einem Zustand s in einen Zustand s' liegt dann vor, wenn gilt: $R_{s,s'}^{a} \geq \tau$ , wobei $\tau$ ein vorbestimmter Grenzwert ist. Demgegenüber ist eine Aktion fatal, wenn gilt: $R_{s,s'}^{a} < \tau$ .

Ein Zustand wird als sicher kategorisiert, wenn für alle in einem Zustand ausführbaren Aktionen a eine Policy P existiert, für die gilt: $\forall i : R_{s^{(i)},s^{(i+1)}}^{\pi\left(s^{(i)}\right)} \geq \tau$ . Ein kritischer Zustand ist ein Zustand, bei dem es eine Aktion gibt, so dass mit einer Wahrscheinlichkeit von $P_{s,s'}^{a} > 0$ ein überkritischer Folgezustand s' erreicht wird. Ein überkritischer Zustand ist hierbei ein Zustand, bei dem für alle Aktionen, die in dem Zustand ausgeführt werden, auch alle nachfolgenden Policies, mit denen die Zustände durchlaufen werden können, an irgendeiner Stelle zu einer fatalen Transition führen. Das heißt, für alle Aktionen a in einem überkritischen Zustand gilt:

$$\exists i : R_{s^{(i)},s^{(i+1)}}^{\pi\left(s^{(i)}\right)} < \tau \ .$$

Aus den obigen Definitionen von sicher, kritisch und überkritisch ergibt sich, dass ein Agent aus kritischen Zuständen - bei sicheren Ausführungen von nachfolgenden Aktionen - wieder in sichere Zustände überführt werden kann. Ferner kann eine Aktion, die als sicher eingestuft wird (d.h. deren Folgezustand sicher ist), in der Exploration des Zustandsraums immer ausgeführt werden, da sie immer einen Reward hat, der größer als $\tau$ ist. Treten Rewards mit Werten unterhalb des Grenzwerts $\tau$ auf, führt dies im Regelfall zur Beschädigung oder zu einem fehlerhaften Betrieb des technischen Systems.

Eine triviale Lösung des Problems der Sicherheitsfunktion besteht darin, sie im Vorhinein zu definieren. Dies würde jedoch detailliertes Wissen über die RL-Umgebung voraussetzen, das meistens jedoch nicht vorhanden ist. Daher ist es erforderlich, die Sicherheitsfunktion aus bereits vorhandenen Explorationsdaten, d.h. aus Beobachtungen von Zustandsübergängen in der Form von (s, a, r, s')-Tupeln zu lernen. Dabei bezeichnet r den Reward, der für die Aktion a vergeben wird, welche den Zustand s in den Zustand s' überführt.

In den nachfolgend beschriebenen Ausführungsformen der Erfindung wird eine Sicherheitsfunktion verwendet, welche unsichere Aktionen vermeidet, die unmittelbar bzw. mittelbar nach deren Ausführung in einen fatalen Zustand führen. Hierzu wird die weiter unten noch beschriebene Backup-Policy berücksichtigt. Diese Policy kommt immer dann zum Einsatz, wenn bei der Exploration des Zustandsraums ein unbekannter, vormals noch nicht durchlaufener Zustand des technischen Systems erreicht wird. In diesem Fall werden basierend auf der Backup-Policy, welche in den Ansprüchen allgemein als Rückführungsregel bezeichnet ist, Aktionen derart ausgeführt, dass wieder in einen bekannten, vormals durchlaufenen Zustand zurückgegangen wird.

Die Sicherheitsfunktion wird in den nachfolgend beschriebenen Ausführungsformen als eine Minimum-Schätzung der Rewards umgesetzt (Min-Reward-Schätzung). Diese Schätzung besteht darin, den minimalen Reward zu schätzen, den man erhält, nachdem man in einem Zustand s die Aktion a ausgeführt hat und der Backup-Policy folgt. Insbesondere wird die Sicherheitsfunktion basierend auf den nachfolgenden zwei Schritten ermittelt:

1. Während der Exploration werden Min-Reward-Samples der Form (s, a, $r_{min}$) gesammelt. Dabei bezeichnet (s, a) das Ausführen der Aktion a im Zustand s und $r_{min}$ den minimalen beobachteten Reward auf der Backup-Trajektorie, die im Anschluss an diese Transition von der Backup-Policy generiert wird.

2. Auf der Basis der während der Exploration gesammelten Samples wird ein Funktionsapproximator gelernt, der von einem Zustands-Aktions-Paar auf den minimalen zu erwartenden Reward abbildet: $R_{min} : S \times A \rightarrow R$.

Die Min-Reward-Samples hängen von der verwendeten Backup-Policy ab. Ähnlich wie die Werte einer Q-Funktion $Q^{\pi}(s,a)$ die erwartete (diskontierte) Summe der zukünftigen Rewards liefert, wenn man in dem Zustand s Aktion a ausführt und anschließend der Policy $\pi$ folgt, liefert $R_{\min}(s,a)$ den minimalen zu erwartenden Reward, wenn man in dem Zustand s Aktion a ausführt und danach der Backup-Policy folgt.

Die Backup-Policy hat die Aufgabe, den bei der Durchführung des Verfahrens verwendeten Agenten in einen bekannten Bereich zurückzuführen, wenn der Agent keine abgesicherte Entscheidung mehr treffen kann, weil er in einen neuen Zustand geraten ist, in dem er die Sicherheit einzelner Aktionen nicht hinreichend gut einschätzen kann. Die Backup-Policy darf dabei selbst nicht in kritische Zustände führen. Dies wird beispielsweise dadurch erreicht, dass die Backup-Policy einen eventuellen stationären Punkt anfährt oder versucht, sich in einem bestimmten Bereich des Zustandsraums aufzuhalten.

Für technische Systeme im Real-Betrieb, die bereits ohne Reinforcement-Learning betrieben werden, ist oftmals bereits ein Regler vorhanden, der als vorweg spezifizierte Backup-Policy verwendet werden kann, sofern sich dieser Regler sicher verhält und nicht zu fatalen Transitionen führt. Wenn ein solcher Regler noch nicht vorhanden ist, ist es notwendig, eine Backup-Policy aus bereits vorhandenen Explorationsdaten, also aus bereits vorhandenen (s, a, r, s')-Tupeln, zu lernen.

Wie oben ausgeführt, wird die Sicherheit von Aktionen über den entsprechenden Reward ausgedrückt, wobei Aktionen mit Rewards kleiner als der Grenzwert $\tau$ einer fatalen Transition entsprechen. Beim Lernen der Backup-Policy aus Explorationsdaten muss die Backup-Policy somit den Reward berücksichtigen. In einer möglichen Variante der Erfindung wird die Backup-Policy mittels einem konventionellen RL-Verfahren bestimmt, wobei nunmehr jedoch nicht die eingangs definierte Value Function verwendet wird, da die daraus ermittelte optimale Policy im Allgemeinen nicht auch gleichzeitig sicher ist. Darüber hinaus kann eine vermeintlich optimale und sichere Policy durch Fehler in der Generalisierung unsicher sein. Um dies abzusichern, wird anstelle des Erwartungswerts der Summe der Rewards der Erwartungswert des Minimums der Rewards maximiert. Die entsprechende Bellman-Optimalitäts-Gleichung lautet dann wie folgt:

$$Q^{m*}(s,a) = \sum_{s' \in S} P_{s,s'}^{a} \min\left[R_{s,s'}^{a}, \max_{a' \in A} Q^{m*}(s',a')\right] \qquad (1)$$

Auf den Diskontierungsfaktor $\gamma$ wurde dabei verzichtet, weil durch die Umformulierung der Zielfunktion das Problem einer divergierenden Summe nicht mehr besteht.

Wenn man für ein gegebenes RL-Problem ein $Q^{m*}$ ermittelt, das diese Gleichung geeignet erfüllt, lässt sich daraus eine bezüglich $Q^{m*}$ greedy Policy $\pi^{m*}$ bestimmen, die bestrebt ist, niedrige Rewards zu vermeiden. Eine Policy ist dabei greedy (gierig), falls sie in jedem Zustand die Aktion mit maximalem Q-Wert ausführt.

Eine solche Max-Min-Q-Funktion, die obige Gleichung (1) erfüllt, lässt sich z.B. mit der aus dem Stand der Technik bekannten dynamischen Programmierung bestimmen, analog wie auch die Q-Funktion der optimalen Policy ermittelt werden kann. Jedoch existiert hier kein eindeutiger Fixpunkt, da etwa $Q=-\infty$ eine zwar unerwünschte, aber zulässige Lösung ist. Die Initialisierung mit $Q=\infty$ garantiert das Erreichen einer korrekten Lösung, da im ersten Iterationsschritt die Rewards am Minimum verwendet werden und nicht die initialen Q-Werte.

Zur Ermittlung der oben beschriebenen Backup-Policy können beliebige aus dem Stand der Technik bekannte RL-Verfahren verwendet werden, insbesondere die bereits oben erwähnte dynamische Programmierung, eine Neural Fitted Q-Iteration (NFQ) sowie auf rekurrenten neuronalen Netzen basierende Verfahren, welche beispielsweise in der Patentanmeldung DE 10 2007 001 025.9 beschrieben sind.

Um eine möglichst breite Datenbasis in der Form einer Vielzahl von Explorationsdaten zu schaffen, wird eine sog. Levelbasierte Exploration eingesetzt. Es handelt sich hierbei um eine graduelle Exploration, die den ausführenden Agenten von einem als sicher bekannten Bereich des Zustandsraums langsam entfernt und zunächst versucht, möglicht viele lokale Beobachtungen zu sammeln. Dazu wird jedem Zustand s ein Level $l \in N$ (N = Menge der natürlichen Zahlen) zugewiesen. Davon ausgehend, dass die Exploration im sicheren Bereich startet, wird für den Ausgangszustand $s_0$ der Level $l(s_0)=0$ gesetzt. Wird während der Exploration ein bisher unbekannter Zustand $s_i$ betreten, so wird sein Level als $l(s_i)=l(s_{i-1})+1$ gesetzt, wobei $l(s_{i-1})$ dem Level des Vorgängerzustands entspricht. Wird beim Verfolgen der Backup-Policy ein neuer Zustand $s_i$ betreten, wird sein Level $l(s_i)$ von dem des Vorgängerzustands $s_{i-1}$ übernommen, d.h. es gilt: $l(s_i)=l(s_{i-1})$. Dies wird dadurch motiviert, dass das Verfolgen der Backup-Policy nicht zu einer Verschlechterung der Sicherheit führt. Basierend auf diesem Level-Konzept läuft die Exploration wie folgt ab:

- Beginnend mit dem Level $l(s_0)=0$ wird jedem im technischen System bekannten Zustand ein Level zugewiesen.
- Es wird ein aktuell zu explorierender Level $l_c$ vorgehalten, wobei zu Beginn $l_c = 0$ initialisiert wird. Ziel der Exploration ist jeweils für einen Level $l_c$, in allen Zuständen, deren Level $l_c$ entspricht, alle dort möglichen Aktionen auszuführen, sofern das Ausführen der Aktion als sicher eingeschätzt wird. Sind alle Zustände des aktuellen Levels vollständig exploriert, wird $l_c$ erhöht.

- Die Exploration wird so lange fortgesetzt, bis ein Abbruchkriterium erfüllt ist, wie z.B. die vollständige Exploration des gesamten sicher explorierbaren Bereiches. In der Praxis wird dies jedoch häufig kaum umsetzbar sein, weshalb das Erreichen einer gewünschten Mindestperformance zweckmäßiger ist.

Um auf diese Art und Weise explorieren zu können, braucht man eine Möglichkeit, Zustände gezielt anzufahren. Nachdem der das Verfahren ausführende Agent nach Erreichen eines neuen Zustands mit erhöhtem Level der Backup-Policy folgt, gelangt dieser früher oder später wieder in einen bekannten Zustand. Von dort aus muss die Möglichkeit bestehen, einen Zustand des aktuellen Levels zu erreichen.

Im Folgenden werden zwei Verfahren beschrieben, wie in geeigneter Weise alle bekannten Zustände eines Levels erreicht werden können und somit alle möglichen Aktionen in einem Level ausgeführt werden können.

Das erste Verfahren ist eine graph-basierte Wegfindung, welche in deterministischen RL-Problemen einen beliebigen bekannten Zustand auffinden kann. Diesem Verfahren liegt die Idee zu Grunde, während der Exploration einen Graphen aufzubauen, dessen Knoten Zustände und dessen Kanten ausgeführte Aktionen repräsentieren. Neben dem Zustand ist an einem Knoten der Level des Zustands vermerkt. Das Verfahren zeichnet sich durch die folgenden Schritte aus:

- Wenn im aktuellen Zustand keine Aktion mehr zu explorieren ist, wird im Graph nach einem Zustand gesucht, dessen Level dem aktuell zu explorierenden entspricht und für den noch sicher explorierbare Aktionen existieren. Wird kein solcher Zustand gefunden, wird der aktuell zu explorierende Level erhöht und die Exploration angehalten.
- Um einen Weg vom aktuellen Zustand zu einem zu explorierenden Zustand zu finden, wird eine Breitensuche auf dem Graphen durchgeführt. Durch das Ausführen der Aktionen, mit denen die Kanten entlang des gefundenen Weges beschriftet sind, gelangt man vom aktuellen Zustand zum Zielzustand.

Das obige Verfahren eignet sich nicht für technische Systeme, welche mehr als einige tausend Zustände umfasst. In vertretbarer Rechenzeit können nur niedrige zweistellige Levels vollständig exploriert werden. Deshalb werden in einer bevorzugten Ausführungsform der graph-basierten Wegfindung benachbarte Zustände geeignet zu einem Cluster zusammengefasst. In dem Kontext dieses graph-basierten Ansatzes entspricht ein Cluster somit einem Knoten im Graphen. Im Allgemeinen wird dabei die Markov-Bedingung verletzt, so dass je nach Anwendungsfall ein geeigneter Kompromiss zwischen Rechenaufwand und Lösbarkeit des Problems gefunden werden muss.

Das zweite Verfahren zur Exploration der Zustände eines Levels besteht in der Wegfindung mittels Reinforcement-Learning. Dieser Ansatz kann auch im stochastischen Fall eingesetzt werden, und es können hierbei konventionelle RL-Verfahren verwendet werden, beispielsweise eines der, in Bezug auf das Lernen der Backup-Policy genannten Verfahren. Dazu wird ein Markov-Entscheidungsprozess definiert, dessen Zustände den zuvor definierten Clustern entsprechen. Nun definiert man die Reward-Funktion $R_{s,s'}^{'a} = 1$, falls R' der angestrebte Zustand ist und $R_{s,s'}^{'a} = 0$ sonst. Für das so definierte RL-Problem ermittelt man eine optimale Policy und folgt dieser so lange, bis der gewünschte Cluster erreicht ist. Es ist auch möglich, mehrere Cluster als Ziel zu definieren. In diesem Fall würde die Policy versuchen, den zum aktuellen Cluster nächstgelegenen Cluster zu erreichen.

Nachfolgend wird eine Ausführungsform eines Algorithmus beschrieben, welche das gesamte Vorgehen der Wegfindung mittels Reinforcement-Learning wiedergibt. Es wird hierbei die Policy des Reinforcement-Learning gelernt und aktualisiert, wobei die Aktualisierung der Policy nach der Durchführung einer bestimmten Anzahl von Aktionen erfolgt.

Der Algorithmus zum Reinforcement-Lernen umfasst die nachfolgenden Schritte:

Voreinstellungen:

Anfangs liegt eine Liste O von Beobachtungen in der Form von (s, a, s')-Tupel vor. Z bezeichnet die Menge der Ziel-Cluster, d.h. diejenigen Cluster, welche durch die Wegfindung zu erreichen sind und Zustände enthalten, in denen noch mögliche Aktionen ausgeführt werden können. n bezeichnet die Anzahl an Aktionen, nach denen die Policy zur Wegfindung zu aktualisieren ist. m ist die maximale Anzahl an Aktionen, nach denen ein Ziel-Cluster erreicht sein muss (Abbruchkriterium).

Zunächst wird das Verfahren wie folgt initialisiert:

Bestimme Reward-Funktion $R'^{a}_{s,s'} = \begin{cases} 1, & falls\ s' \in Z \\ 0, & sonst \end{cases} \quad \forall (s,a,s') \in S \times A \times S$. Bestimme Schätzung T der Übergangswahrscheinlichkeiten aus O. Löse das durch T und R definierte RL-Problem, woraus die Policy $\pi_\omega$ erhalten wird.

Anschließend erfolgt die Policy-Anwendung zur Wegfindung basierend auf folgenden Schritten:

Es wird gesetzt: $c:=0$

Es werden folgende Schritte in einer Wiederhol-Schleife durchgeführt:

Wiederhole
falls $c>0 \wedge c \bmod n=0$ dann
Aktualisiere Schätzung T basierend auf O;
Löse das durch T und R definierte RL-Problem und erhalte hieraus aktualisierte Policy $\pi_\omega$
Ende der Falls-Bedingung
(Mit der obigen Falls-Bedingung wird die Policy aktualisiert.)

Es werden folgende Definitionen festgelegt:

s := aktueller Zustand;

$$ a := \pi_\omega(s); $$

Führe die Aktion a aus und aktualisiere wie folgt:

s' := aktueller Zustand;
hänge(s, a, s') an O an;
$c:=c+1$ ;
überprüfe, ob die maximale Anzahl an Aktionen erreicht ist, und zwar wie folgt:
Falls c = m, dann
gebe "false" zurück (d.h. die Wegfindung war erfolglos); Ende der Falls-Bedingung

Wiederhole obige Schritte der Wiederholschleife, bis gilt:

$s' \in Z$

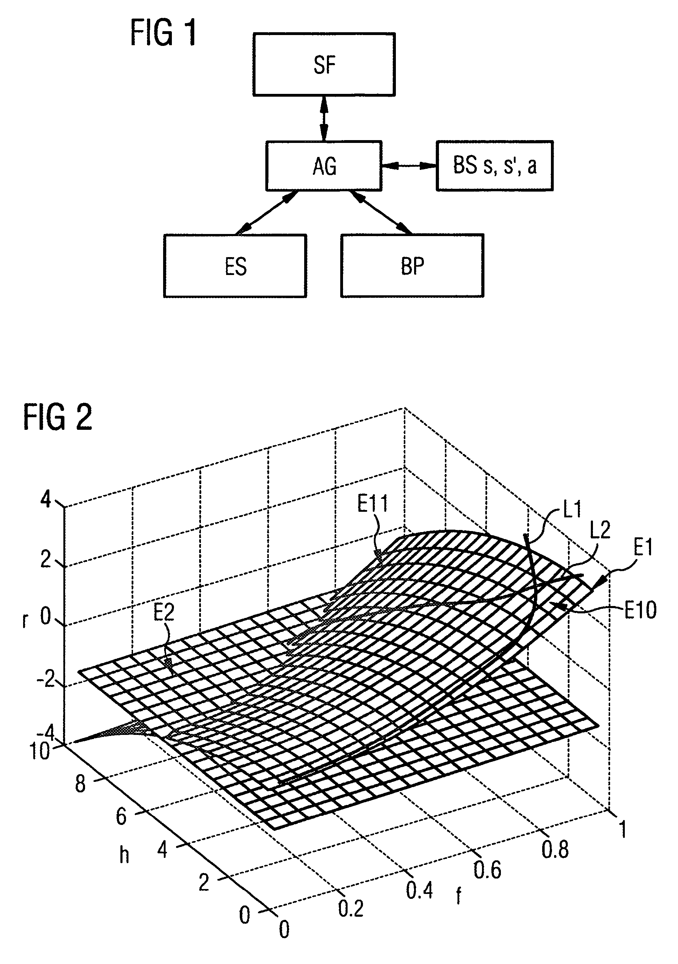

Ist die Bedingung $s' \in Z$ erfüllt, war die Wegfindung erfolgreich und es wird der Wert "true" zurückgegeben.
Die oben beschriebenen, möglichen Varianten zur Durchführung des erfindungsgemäßen Explorations-Verfahrens werden nochmals in dem Diagramm gemäß Fig. 1 verdeutlicht. Das Verfahren wird durch einen Agenten AG ausgeführt, und es wird zur Durchführung des Verfahrens sowohl eine Sicherheitsfunktion SF, eine Explorations-Strategie ES sowie eine Backup-Policy BP verwendet. Die Sicherheitsfunktion wird dabei mit der oben beschriebenen Min-Reward-Schätzung approximiert, wobei insbesondere eine lokal-quadratische Approximation verwendet wird. Gegebenenfalls könnte diese Approximation auch mit einem neuronalen Netz, beispielsweise einem Mehrschicht-Perzeptron, durchgeführt werden. Die Explorations-Strategie ES versucht, innerhalb eines Levels alle möglichen Aktionen auszuführen. Es kann dabei die oben beschriebene graph-basierte Wegfindung bzw. die Wegfindung mittels Reinforcement-Learning verwendet werden. Als Backup-Policy BP kann ein vorhandener Regler eingesetzt werden oder die Backup-Policy kann mit einem Reinforcement-Learning-Verfahren gelernt werden. Ausführungsformen des erfindungsgemäßen Verfahrens wurden durch die Erfinder implementiert und an einer beispielhaften Testumgebung in der Form des bekannten Benchmark-Problems BurnSim getestet. Die Umgebung BurnSim ist in Fig. 1 durch das Bezugszeichen BS verdeutlicht. Beispielhaft werden dabei die Zustände des BurnSim-Problems als s, s' und die durchgeführten Aktionen als a bezeichnet. s' ist dabei der Folgezustand, der bei der Durchführung einer Aktion a aus dem Zustand s hervorgeht.
Nachfolgend wird das zum Test des erfindungsgemäßen Verfahrens verwendete Benchmark-Problem BurnSim erklärt. Ausführungsformen des erfindungsgemäßen Verfahrens wurden für dieses Problem implementiert und experimentell untersucht. Das BurnSim-Problem ist motiviert durch ein real auftretendes Problem bei der Regelung von Gasturbinen. Eine Turbine optimal zu betreiben heißt, sie mit möglicht hoher Leistung zu fahren. Im Hochleistungsbereich einer Turbine kommt es jedoch zu einer unerwünschten Dynamik in der Brennkammer, welches auch als "Brummen" (englisch: humming) bekannt ist. Wenn dieses Brummen zu stark wird, kann es zu einer Beschädigung der Turbine führen. Aus diesem Grund ist es das Ziel, die Gasturbine mit möglichst hoher Leistung zu betreiben und gleichzeitig darauf zu achten, dass das Brummen nicht zu stark wird. Der Zustandsraum des technischen Systems im BurnSim-Problem ist zweidimensional und lautet wie folgt:

$$S := \left\{ (f, h) \middle| f \in [0,1), h \in [0, \infty) \right\}$$

Dabei bezeichnet f die Treibstoffzufuhr, welche direkt der Leistung der Turbine entspricht. h steht für das Brummen. Es sind drei Aktionen erlaubt, nämlich Treibstoffzufuhr verringern, beibehalten und erhöhen, welche nachfolgend mit den englischen Begriffen decrease (entspricht verringern), keep (entspricht beibehalten) und increase (entspricht erhöhen) bezeichnet werden. Der Aktionsraum lautet somit wie folgt:

$$A := \{decrease, keep, increase\}$$

Die Aktionen decrease und increase verändern dabei f um 0,05, jedoch muss f in den Grenzen [0, 1) bleiben. Die Systemdynamik, also die Veränderungen des Zustands von einem Zeitschritt zum nächsten bei Ausführungen der Aktion a, ist gegeben durch:

$$f_{t+1} = \begin{cases} f_t - 0.05, falls\ a = decrease \wedge f_t - 0.05 \geq 0 \\ f_t + 0.05, falls\ a = increase \wedge f_t + 0.05 < 1 \\ f_t, sonst \end{cases}$$

$$h_{t+1} = \begin{cases} 2f_{t+1}h_t, falls\ 2f_{t+1}h_t > f_{t+1}/5 \\ f_{t+1}/5, sonst \end{cases}$$

Die Reward-Funktion ist nur vom Folgezustand $s_{t+1} = (f_{t+1}, h_{t+1})$ abhängig und lautet wie folgt:

$$r_t = 4f_{t+1}^2 - \left( \frac{h_{t+1} - f_{t+1}/5}{5} \right)^2$$

Der Grenzwert der Sicherheit wird gesetzt als:

$\tau = -1$

Somit ergibt sich der Status der Sicherheit als:

$r_t < -1 \Rightarrow$ Zustand $s_t$ ist fatal,
$r_t \geq -1 \Rightarrow$ Zustand $s_t$ ist nicht fatal.

Das Ziel besteht darin, die erwartete Summe der Rewards zu maximieren, ohne jemals einen Reward kleiner als -1 zu beobachten. Offenbar wird ein möglichst hoher Reward erreicht, wenn f möglichst hoch und gleichzeitig h möglichst niedrig ist.

Fig. 2 veranschaulicht die verwendete Reward-Funktion. Entlang der Achse f ist die Treibstoffzufuhr und entlang der Achse h das Brummen aufgetragen, wobei höhere Werte für eine höhere Treibstoffzufuhr bzw. ein höheres Brummen stehen. Entlang der Achse r ist der Reward wiedergegeben. Die gekrümmte Gitterebene E1 stellt dabei die Reward-Funktion in Abhängigkeit von der Treibstoffzufuhr und von dem Brummen dar. Ferner ist eine Grenzwertebene E2 wiedergegeben, auf der alle Rewards den Wert -1 aufweisen. Die Rewards der Reward-Funktion dürfen niemals Werte unterhalb dieser Grenzebene annehmen, da dies zu einem fatalen Zustand der Gasturbine führen würde. In der Ebene der Reward-Funktion ist ein Bereich E10 durch die Linie L1 abgegrenzt, wobei dieser Bereich der Reward-Funktion nie erreicht wird, weil aufgrund der Systemdynamik eine hohe Treibstoffzufuhr in Kombination mit niedrigem Brummen nicht möglich ist. Ferner ist durch eine Linie L2 ein Bereich E11 der Reward-Funktion abgegrenzt, wobei dieser Bereich ein unsicherer Bereich von Zuständen ist, d.h. die Einnahme von Zuständen in dem unsicheren Bereich führt zwangsläufig zu einem späteren Zeitpunkt in fatale Zustände.

Die Linie L1 in Fig. 2 erhält man dadurch, dass man bei f = 0 beginnend wiederholt die Aktion increase ausführt. Wie man der Fig. 2 entnehmen kann, erhöht sich dabei auch der Reward. Allerdings kommt es auch zu einer Erhöhung des Brummens, was sich negativ auf den Reward auswirkt. Im Sinne einer sicheren Exploration wäre der Zustand am Ende der Trajektorie (f = 0,95; h = 3,35) bereits überkritisch, denn selbst wenn man die Treibstoffzufuhr sofort verringert, wird ein Reward von -138,45 nicht zu vermeiden sein, da das Brummen trotz der Treibstoff-Verringerung bis auf 59,14 steigt. Wie bereits erwähnt, markiert die Trajektorie L1 auch die Grenze des erreichbaren Bereichs des Zustandsraums. Der Bereich unterhalb dieser Grenze kann aufgrund der Systemdynamik nicht erreicht werden. Durch die Trajektorie L1 wird eine grundlegende Schwierigkeit der sicheren Exploration bereits deutlich: Es muss ein Zustand als unsicher erkannt werden, selbst wenn dieser zwangsläufig, aber nur mittelbar in einen fatalen Zustand führt.

Wie bereits erwähnt, ist die Grenze des sicheren Bereichs in Fig. 2 als Linie L2 markiert. Von jedem Zustand oberhalb dieser Grenze, also bei höherer Treibstoffzufuhr und/oder höherem Brummen, ist es nicht möglich, Rewards kleiner als den Grenzwert von -1 zu vermeiden. Sollte sich der Agent also während der Exploration dorthin bewegen, hat er das Ziel der sicheren Exploration verfehlt. Die BurnSim-Umgebung besitzt einen stationären Bereich bei f = 0,5. An dieser Stelle wird das Brummen nicht verändert. Wenn dort die Aktion keep ausgeführt wird, verändern sich weder Zustand noch Reward.

Bei der Implementierung des erfindungsgemäßen Verfahrens für das BurnSim-Problem sind für die Sicherheitsfunktion, die Explorations-Strategie und die Backup-Policy verschiedene Varianten implementiert worden. Der Agent, mit dem die einzelnen Zustände erfindungsgemäß exploriert werden, hält die einzelnen Komponenten zusammen und koordiniert das Zusammenspiel. Der Gesamtprozess der sicheren Exploration kann wie folgt zusammengefasst werden:

1. Initialisierung:
Es wird davon ausgegangen, dass sich der Agent zu Beginn der Exploration in einem sicheren Bereich des Zustandsraums befindet. Die Liste der Beobachtungen wird als leer initialisiert, ebenso die Menge der Zustände mit noch zu explorierenden Aktionen, der aktuelle Level wird auf 0 gesetzt.

2. Initiales Folgen des Backup-Policy:
Der Backup-Policy wird so lange gefolgt, bis diese einen stationären Punkt oder einen bestimmten Bereich des Zustandsraums erreicht und nicht mehr verlässt. Alle dabei besuchten Zustände erhalten Level 0 und werden in die Liste der Zustände mit noch zu explorierenden Aktionen eingetragen, sofern die Backup-Policy nicht bereits alle möglichen Aktionen in einem Zustand ausgeführt hat.

3. Explorationsschritt:
Die Explorations-Strategie wählt eine zu explorierende Aktion aus. Falls im aktuellen Zustand keine Aktion zu explorieren ist (entweder, weil bereits alle exploriert wurden, oder das Level des aktuellen Zustands nicht dem aktuell zu explorierenden Level entspricht), generiert sie die nötigen Aktionen, durch die der Agent in einen Zustand mit aktuell zu explorierenden Aktionen gelangt, um anschließend die dort zu explorierende Aktion zu wählen. Vor dem Ausführen der Aktion prüft der Agent mit Hilfe der Sicherheitsfunktion ihre Sicherheit. Wird die Aktion als sicher eingeschätzt, wird sie ausgeführt. Andernfalls wird sie als unsicher markiert und die Backup-Policy genutzt, um in den sicheren Bereich zurückzukehren. Für den Fall, dass beim Ausführen des Explorations-Schritts ein neuer, bisher unbekannter Zustand oder ein bekannter Zustand mit höherem Level als dem aktuell zu explorierenden erreicht wurde, wird ebenfalls die Backup-Policy genutzt.

4. Rückkehr mittels der Backup-Policy:
Wurde ein neuer Zustand oder ein Zustand mit höherem als dem aktuell zu explorierenden Level betreten, wird die Backup-Policy genutzt, um in den bekannten Bereich zurückzukehren. Im einfachsten Fall wird dabei die Backup-Policy so lange genutzt, bis ein Zustand mit Level 0 erreicht wurde.

5. Level-Erhöhung:
Wenn alle sicheren Aktionen in allen Zuständen des aktuellen Levels exploriert wurden, wird der Level erhöht und die Exploration mit Schritt 3 fortgesetzt.

6. Explorations-Ende:

Die Exploration ist beendet, wenn sämtliche sicheren Aktionen in allen Zuständen ausgeführt wurden oder wenn ein AbbruchKriterium erfüllt ist. Dies kann das Erreichen eines Maximal-Levels sein. Ebenso ist es möglich, auf Basis der bereits gesammelten Beobachtungen eine optimale Policy zu bestimmen und deren Performance zu ermitteln. Wenn die Policy die gewünschte Qualität erreicht hat oder sich mit weiteren Beobachtungen nicht mehr wesentlich ändert, kann die Exploration beendet werden.

Nachfolgend wird beschrieben, wie für das BurnSim-Problem die Sicherheitsfunktion bestimmt wird. Für die Realisierung der Sicherheitsfunktion wird die Min-Reward-Funktion lokalquadratisch approximiert. Aus diesem Grund wurde die Schätzung der Min-Reward-Funktion linear im Merkmalsraum

$$\phi_i = \left( f_i, h_i, f_i^2, h_i^2, f_i h_i, 1 \right)$$

mit $f_i$ als Treibstoffzufuhr und $h_i$ als Brummen der jeweiligen Transitionen i realisiert. Die dabei entstehende Merkmals-Matrix

$$\mathbf{X} = \begin{pmatrix} f_1 & h_1 & f_1^2 & h_1^2 & f_1 h_1 & 1 \\ \vdots & \vdots & \vdots & \vdots & \vdots & \vdots \\ f_k & h_k & f_k^2 & h_k^2 & f_k h_k & 1 \end{pmatrix}$$

wird schließlich mit der Methode der kleinsten Quadrate $\mathbf{w} = (\mathbf{X}^T\mathbf{X})^{-1}\mathbf{X}^T\mathbf{y}$ an die beobachteten Min-Rewards

$$\mathbf{y} = \begin{pmatrix} r_{\min,1} \\ \vdots \\ r_{\min,k} \end{pmatrix}$$

approximiert. Standardmäßig wurden die zehn nächsten Nachbarn herangezogen. Wird der Merkmalsraum nicht vollständig aufgespannt, d.h. ist $\mathbf{X}^T\mathbf{X}$ nicht regulär, werden weitere Nachbarn hinzugezogen. Die Singularität von $\mathbf{X}$ wurde bei Überschreiten von $\mathbf{Cond(X^TX)}$>1000 angenommen.

In dem BurnSim-Problem wurde in einer Ausführungsform ein im Vorhinein bekannter Standard-Regler als Backup-Policy genutzt. Dieser Regler liefert folgende Backup-Policy:

$$\pi^{backup}\left(\mathbf{s} = \left( f, h \right)\right) = \begin{cases} increase, falls\ f < 0{,}425 \\ decrease, falls\ f > 0{,}425 \\ keep, sonst \end{cases}$$

Der Regler strebt einen Zustand unterhalb des stationären Bereichs bezüglich Treibstoffzufuhr an und führt damit zu einer permanenten Reduktion des Brummens.

Falls eine Backup-Policy im Vorhinein nicht bekannt ist, muss sie unter Verwendung des im Vorangegangenen beschriebenen RL-Verfahrens, welches anstelle des Erwartungswerts der Summe der Rewards den Erwartungswert des Minimums der Rewards maximiert, aus bereits vorhandenen Beobachtungen gelernt werden. In einer für das Burn-Sim-Problem implementierten Ausführungsform werden dabei inspiriert von der Idee des sog. Apprenticeship Learning die Beobachtungen aus einer Trajektorie gewonnen, die ein sog. Lehrer vorgegeben hat. Diese Lehrer-Trajektorie stellt somit einen anfänglichen Datensatz aus (s, a, r, s')-Tupeln dar, mit dem die Backup-Policy durch ein RL-Verfahren gelernt wird.

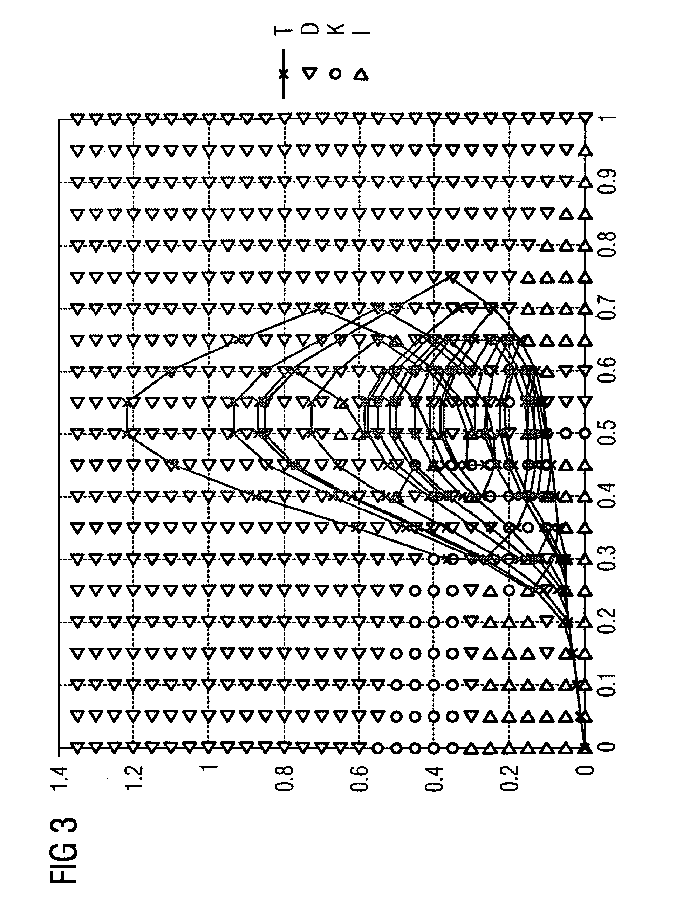

Fig. 3 zeigt ein Diagramm, auf dem entlang der Abszisse die Treibstoffzufuhr f und entlang der Ordinate das Brummen h aufgetragen ist. In dem Diagramm ist die Lehrer-Trajektorie T wiedergegeben. Diese Trajektorie umfasst alle für eine sichere Backup-Policy benötigten Beobachtungen. Insbesondere sind Beobachtungen im Bereich rechts von f = 0,5 wichtig, damit gelernt werden kann, dass dort eine Treibstoffzufuhr-Verringerung (decrease) die sichere Aktion ist. Darüber hinaus ist in Fig. 3 auch die gelernte Backup-Policy durch entsprechende, in den jeweiligen Zuständen durchzuführende Aktionen eingezeichnet. Hierbei stehen die nach links gerichteten Dreiecke D für ein Herabsetzen des Treibstoffs, die Kreise K stehen für ein Beibehalten des Treibstoffs und die nach rechts zeigenden Dreiecke I für eine Erhöhung des Treibstoffs.

Da nur eine überschaubare Anzahl von Zuständen in der Lehrer-Trajektorie vorkommt, war es möglich, diese Zustände als diskret aufzufassen und tabellenbasiert eine Q-Funktion unter Anwendung der Variation der Bellman-Optimalitäts-Gleichung (siehe Gleichung (1)) zu bestimmen. Nicht-determinierte Q-Werte, deren Transitionen vom Lehrer nicht durchgeführt wurden, werden darüber hinaus im Nachhinein auf -∞ gesetzt, so dass auch eine auf der resultierenden Q-Funktion basierende Policy diese Aktion niemals ausführen kann. Dies ist erforderlich, um Sicherheit garantieren zu können.

Die Q-Funktion enthält nur für einige Zustände des Zustandsraums Einträge. Eine Backup-Policy muss jedoch für alle Zustände des gesamten Zustandsraums eine Aktion liefern können. Dies wurde durch eine einfache Nächster-Nachbar-Generalisierung erreicht, für die zu einem gegebenen Zustand s der Zustand s in Q gesucht wird, dessen euklidischer Abstand zu s minimal ist.

Wie bereits erwähnt, zeigt Fig. 3 sowohl die verwendete Lehrer-Trajektorie als auch die resultierende Policy. Lediglich für die Punkte der Trajektorie enthält die Q-Funktion Einträge, für alle anderen Punkte wird die Aktion anhand der Q-Werte des nächsten Nachbars gewählt. Man erkennt, dass in fast allen Fällen die Aktion gewählt wird, welche die Treibstoffzufuhr in Richtung 0,5 verändert. Wenn die Lehrer-Trajektorie für einen Zustand nur eine Aktion enthält, so wählt auch die gelernte Policy für diesen Zustand und seine Nachbarn diese Aktion, selbst wenn sie nicht optimal im Sinne der Maximierung des minimalen Rewards ist. Dieser Effekt ist insbesondere im Bereich von $f \leq 0,3$ und $h \approx 0,4$ (Aktion keep) sowie im Bereich von $0,65 \leq f \leq 0,85$ und $h \leq 0,1$ (Aktion increase) zu beobachten. In beiden Fällen ist das Fehlverhalten jedoch unkritisch: Das Ausführen von keep in Bereichen von $f < 0,5$ führt zur Verringerung des Brummens; das erwünschte increase im anderen genannten Bereich ist unproblematisch, weil dieser Bereich des Zustandsraums nie betreten werden kann.

Bei der Implementierung des erfindungsgemäßen Verfahrens für das BurnSim-Problem wurden zwei Realisierungen der für die Explorations-Strategie notwenigen Wegfindung eingesetzt. Zum einen wurde eine graph-basierte Wegsuche durch eine Breitensuche in einem Graphen verwendet und zum anderen wurde die Suche durch Definition und Lösung eines Wegfindungs-RL-Problems durchgeführt.

Für den graph-basierten Ansatz wurde der Zustandsraum künstlich verkleinert, indem in der BurnSim-Implementierung nach jedem Schritt das Brummen auf die Genauigkeit von 1/50 gerundet wurde. Es wurde somit das RL-Problem selbst verändert. Bei realen Problemen ist die Verkleinerung des Zustandsraums in dieser Form nicht möglich.

Alternativ zur graph-basierten Wegsuche wurde der Wegfindungsansatz mittels Reinforcement-Learning verfolgt, bei dem Zustände zu Clustern aggregiert werden. Die Aggregation wurde dabei wie folgt vorgenommen:

- Da die Treibstoffzufuhr nur um 0,05 erhöht und verringert werden kann und immer im Intervall [0,1) gehalten wird, kann der Zustand der Treibstoffzufuhr nur 20 diskrete Werte annehmen.
- Das Brummen nimmt hingegen kontinuierliche Werte an. Zur Aggregation von Zuständen wurde das Brummen auf eine Genauigkeit von 1/50 gerundet. Dabei handelt es sich nicht um eine Änderung des RL-Problems, das BurnSim-Problem selbst bleibt nämlich unverändert. Beispielsweise sind die Zustände $s_1 = (f = 0,25; h = 0,1239)$ und $s_2 = (f = 0,25; h = 0,1277)$ zwei unterschiedliche Zustände in BurnSim. Beide gehören jedoch zum aggregierten Zustand $\hat{s}_1 = (f = 0,25; h = 0,12)$.

Die Exploration wurde auf den so aggregierten Zuständen nach dem gleichen Prinzip wie die graph-basierte Variante durchgeführt.

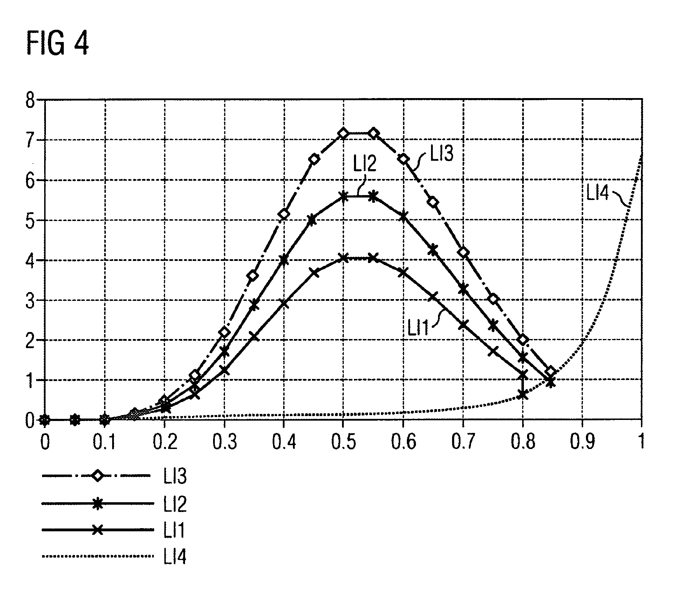

Fig. 4 zeigt Ergebnisse der basierend auf BurnSim durchgeführten Simulationen zur Exploration des Zustandsraums. Dabei ist in Fig. 4 entlang der Abszisse die Treibstoffzufuhr f und entlang der Ordinate das Brummen h wiedergegeben. Durch die Linie LI1 wird die Explorationsgrenze der Wegfindung basierend auf Reinforcement-Learning wiedergegeben, durch die Linie LI2 die Explorationsgrenze basierend auf graph-basierter Wegfindung und durch die Linie L3 die Grenze der Rewards $\tau = -1$. Die unterhalb der Linien LI1 und LI2 liegenden Zustände sind Zustände, welche mit den entsprechenden Wegfindungs-Verfahren erreicht werden. Die Zustände unterhalb der Grenze gemäß der Linie LI3 stellen die maximal sicher explorierbaren Zustände dar. Darüber hinaus ist als gepunktete Linie LI4 die Erreichbarkeitsgrenze wiedergegeben, d.h. alle Zustände rechts der Linie sind in dem BurnSim-Problem nicht erreichbar. Die Linie LI4 ist hierbei die Projektion der Linie L1 der Fig. 2 in die durch die Achsen f und h aufgespannte Ebene.

Bei der Verwendung der graph-basierten Exploration wurde die lokal-quadratische Approximation verwendet und als Backup-Policy kam der oben beschriebene Standard-Regler $\pi^{backup}$ zum Einsatz. Wie sich aus Fig. 4 ergibt, wurde während der Exploration die Grenze für $\tau$=-1 nicht überschritten, so dass die Exploration das Kriterium der sicheren Exploration erfüllt.

Bei der Exploration mit Zustands-Aggregation und RL-Wegfindung wurde wie bei der graph-basierten Exploration die lokal-quadratische Approximation als Sicherheitsfunktion verwendet. Bei der Backup-Policy handelte es sich um eine Policy, die, wie oben beschrieben, aus der Lehrer-Trajektorie T der Fig. 3 ermittelt wurde. Der bei dieser Wegfindung explorierte Bereich ist kleiner als der durch die graph-basierte Exploration abgedeckte Bereich, da die Linie LI1 unterhalb der Linie LI2 liegt.

In manchen Bereichen des Zustandsraums enthält die zum Lernen verwendete Lehrer-Trajektorie keine alternativen Aktionen, sondern nur eine nicht optimale. Mangels Alternativen in den Trainingsdaten wählt die resultierende Policy auch diese Aktion. Das Ergebnis ist eine Backup-Policy, die das Brummen langsamer senkt als der Standard-Regler. Dadurch werden auf den Backup-Trajektorien dieser Policy geringere Rewards beobachtet als auf denen des Standard-Reglers. Als Folge stuft die Sicherheitsfunktion früher Aktionen als unsicher ein.

Trotz des gegenüber der graph-basierten Exploration kleineren abgedeckten Bereichs wurden Informationen aus dem gesamten Bereich des Zustandsraums gewonnen, der von der Trajektorie der optimalen Policy betreten wird. Somit sind die Beobachtungen in diesem Fall ausreichend, um daraus die optimale Policy abzuleiten. Die optimale Policy ist hierbei diejenige Aktionsauswahl-Regel, welche im Durchschnitt die höchsten Rewards liefert. Diese Policy ist für das BurnSim-Problem bekannt.

Die graph-basierte Exploration benötigte ca. 52000 Schritte, bis keine weitere Exploration mehr möglich war. Im Falle der Exploration auf aggregierten Zuständen mit RL-Wegfindung wurden dagegen ca. 98000 Schritte benötigt. Die größere Zahl an Explorationsschritten begründet sich durch die für die Exploration weniger geeignete gelernte Backup-Policy sowie der Unsicherheit in der Wegfindung aufgrund der Verletzung der Markov-Bedingung durch die Zustands-Aggregation.

Um die Performanz des Verfahrens nachzuweisen, wurden die mit den oben beschriebenen Explorations-Verfahren ermittelten Daten zum Lernen der optimalen Policy verwendet. Zu diesem Lernen wurden verschiedene RL-Verfahren eingesetzt. Insbesondere wurde die Neural Fitted Q-Iteration, dynamische Programmierung mit Nächster-Nachbar-Generalisierung und die bekannte optimale Policy verglichen. Aus nachfolgender Tabelle 1 ergeben sich die erreichten Durchschnitts-Rewards von zwei RL-Verfahren im Vergleich zur optimalen Policy, wobei beide RL-Verfahren sowohl mit graph-basierter als auch mit RL-Wegfindung durchgeführt wurden.

Tabelle 1

| RL-Verfahren | Durchschnittlicher Reward | |
| --- | --- | --- |
| | Graph-basiert | RL-Wegfindung |
| Dynamische Programmierung | 1.164 | 1.132 |
| Neural Fitted Q-Iteration | 1.166 | 1.166 |
| Optimale Policy | 1.166 | |

Man erkennt aus der Tabelle 1, dass sowohl die Exploration mit graph-basierter Wegfindung als auch mit RL-Wegfindung zu Policies mit Rewards führt, die nahe am Reward der optimalen Policy liegen bzw. diesem sogar entsprechen. Insbesondere wurde mit der Neural Fitted Q-Iteration sowohl für die graph-basierte als auch für die RL-Wegfindung die optimale Policy ermittelt.

Aus den obigen Ausführungen ergibt sich, dass mit den verschiedenen Ausführungsformen des erfindungsgemäßen Verfahrens sehr gut die Zustände eines technischen Systems dahingehend exploriert werden können, dass eine gute Datenbasis erreicht wird, mit der ein entsprechendes Steuerungs- bzw. Regelverfahren für das technische System gelernt werden kann. Dabei wird bei der Exploration insbesondere vermieden, dass Zustände erreicht werden, welche unmittelbar bzw. mittelbar zu einer Beschädigung des technischen Systems führen können.

**Patentansprüche**

1. Verfahren zur rechnergestützten Exploration von Zuständen (s, s') eines technischen Systems, bei dem:

   - aufeinander folgend Zustände (s, s') des technischen Systems durchlaufen werden, indem in einem jeweiligen Zustand (s, s') des technischen Systems eine Aktion (a) ausgeführt wird, welche zu einem neuen Zustand (s, s') führt;

**dadurch gekennzeichnet, dass**

- vor dem Ausführen von Aktionen (a), welche zu unbekannten, vormals noch nicht durchlaufenen Zuständen (s, s') führen, mit Hilfe einer Sicherheitsfunktion (SF) bestimmt wird, ob die jeweilige Aktion (a) eine zulässige oder unzulässige Aktion (a) im technischen System ist, wobei die Aktion (a) nur ausgeführt wird, wenn sie zulässig ist; und

- bei Erreichen von unbekannten Zuständen (s, s') die nachfolgenden Aktionen (a) basierend auf einer Rückführungsregel (BP) zum Zurückführen der Zustände (s, s') auf bekannte Zustände (s, s') ausgewählt werden.

2. Verfahren nach Anspruch 1, bei dem die unzulässigen Aktionen (a) derart charakterisiert sind, dass beim Ausführen einer unzulässigen Aktion (a) das technische System mit einer Wahrscheinlichkeit von eins oder mit einer Wahrscheinlichkeit größer null in einen Zustand (s, s') gelangt, der zu einem unerwünschten und/oder fehlerhaften Betriebszustand des technischen Systems unmittelbar nach dem Ausführen der unzulässigen Aktion (a) oder mittelbar nach dem Ausführen weiterer Aktionen (a) führt.

3. Verfahren nach Anspruch 1 oder 2, bei dem ferner bei Erreichen von Zuständen (s, s') des technischen Systems, bei denen eine auszuführende Aktion (a) gemäß der Sicherheitsfunktion (SF) als unzulässig eingestuft wird, die nachfolgenden Aktionen (a) basierend auf der Rückführungsregel (BP) ausgewählt werden.

4. Verfahren nach einem der vorhergehenden Ansprüche, bei dem den ausgeführten Aktionen (a) jeweils in Abhängigkeit von dem Zustand (s), in dem die Aktion (a) ausgeführt wird, und dem durch die Aktion erreichten neuen Zustand (s') eine Bewertung (r) zugeordnet wird.

5. Verfahren nach Anspruch 4, bei dem eine unzulässige Aktion (a) eine Bewertung (r) aufweist, die kleiner als ein vorbestimmter Wert ist.

6. Verfahren nach Anspruch 4 oder 5, bei dem die Sicherheitsfunktion (SF) basierend auf den Bewertungen (r) der Aktionen (a) gelernt wird.

7. Verfahren nach Anspruch 6, bei dem durchlaufenen Paaren aus Zustand (s) und in dem Zustand (s) ausgeführter Aktion (a) jeweils die minimale Bewertung ($r_{min}$) zugewiesen wird, welche nach dem Ausführen der Aktion (a) und beim anschließenden Durchlaufen der Rückführungsregel (BP) für eine Aktion (a) auftritt, wobei basierend auf der minimalen Bewertung ($r_{min}$) die Sicherheitsfunktion (SF) bestimmt wird und wobei die Sicherheitsfunktion (SF) eine unzulässige Aktion dann feststellt, wenn die minimale Bewertung ($r_{min}$) kleiner als ein vorbestimmter Wert ist.

8. Verfahren nach Anspruch 7, bei dem die Sicherheitsfunktion (SF) mit einem Funktionsapproximator bestimmt wird, der die minimalen Bewertungen ($r_{min}$) basierend auf einer lokalen Extrapolation um den gerade mit einer Aktion (a) zu verändernden Zustand (s, s') approximiert.

9. Verfahren nach Anspruch 8, bei dem der Funktionsapproximator eine lokal-lineare und/oder lokal-quadratische Extrapolation durchführt.

10. Verfahren nach einem der vorhergehenden Ansprüche, bei dem die Rückführungsregel (BP) eine für das technische System vorgegebene Regel ist.

11. Verfahren nach Anspruch 10, bei dem die Rückführungsregel (BP) durch einen vorhandenen Regler des technischen Systems realisiert ist.

12. Verfahren nach einem der Ansprüche 4 bis 9 oder nach Anspruch 10 oder 11 in Kombination mit Anspruch 4, bei dem die Rückführungsregel (BP) mit einem bestärkenden, die Bewertungen (r) der Aktionen (a) berücksichtigenden Lernverfahren bestimmt wird.

13. Verfahren nach Anspruch 12, bei dem das bestärkende Lernverfahren auf einem Optimalitätskriterium basiert, gemäß dem das Minimum des Erwartungswerts aller zukünftigen Bewertungen (r) maximiert wird.

14. Verfahren nach einem der vorhergehenden Ansprüche, wobei beim Durchlaufen der Zustände (s, s') des technischen Systems den Zuständen (s, s') aufeinander folgende Kategorien derart zugeordnet werden, dass

i) falls die Zustände (s, s') basierend auf der Rückführungsregel (BP) verändert werden, einem durch eine Aktion (a) erreichten unbekannten, vormals noch nicht durchlaufenen Zustand (s, s') die Kategorie zugeordnet wird, welche dem Zustand (s, s') vor dem Durchführen der Aktion (a) zugeordnet ist;

ii) in allen anderen Fällen einem durch eine Aktion erreichten unbekannten, vormals noch nicht durchlaufenen Zustand (s, s') eine Kategorie zugeordnet wird, welche der Kategorie folgt, die dem Zustand (s, s') vor dem Durchführen der Aktion (a) zugeordnet ist.

15. Verfahren nach Anspruch 14, bei dem die Zustände (s, s') derart nach Kategorien durchlaufen werden, dass in einer Kategorie zunächst alle möglichen auszuführenden Aktionen (a) exploriert werden und anschließend zur nächsten Kategorie übergegangen wird.

16. Verfahren nach Anspruch 15, bei dem die Zustände (s, s') einer Kategorie mit einem graph-basierten Wegfindungsverfahren durchlaufen werden, bei dem während des Durchlaufens der Zustände (s, s') ein Graph aufgebaut wird, dessen Knoten den durchlaufenen Zuständen (s, s') und dessen Kanten den ausgeführten Aktionen (a) entsprechen und in welchem für jeden Knoten die Kategorie des entsprechenden Zustands (s, s') hinterlegt ist, wobei bei Erreichen eines Zustands (s, s'), in dem bereits alle möglichen Aktionen (a) exploriert wurden, in dem Graphen nach einem Weg zu einem Zustand (s, s') in der gleichen Kategorie gesucht wird, in dem noch Aktionen (a) exploriert werden können, und bei Auffinden eines derartigen Wegs zu dem Zustand (s, s') über diesen Weg gegangen wird.

17. Verfahren nach Anspruch 16, bei dem im Falle, dass kein Weg zu einem Zustand (s, s') in der gleichen Kategorie gefunden wird, in dem noch Aktionen (a) ausgeführt werden können, die Zustände (s, s') der darauf folgenden Kategorie durchlaufen werden.

18. Verfahren nach einem der Ansprüche 15 bis 17, bei dem die Zustände (s, s') einer Kategorie mit einem bestärkenden Lernverfahren basierend auf einer Helohnungsfunktion durchlaufen werden, wobei gemäß der Belohnungsfunktion einer Aktion (a) eine Belohnung zugewiesen wird, wenn sie zu einem Zustand (s, s') in der gerade durchlaufenen Kategorie führt, in dem die Exploration von zumindest einer Aktion (a) möglich ist.

19. Verfahren nach Anspruch 18, bei dem in dem bestärkenden Lernverfahren eine Aktionsauswahl-Regel nach Durchlaufen einer vorbestimmten Anzahl an Zuständen (s, s') aktualisiert wird, wobei bei der Aktualisierung die neu hinzukommenden Aktionen und der jeweilige Zustand (s), in dem die jeweilige neu hinzukommende Aktion ausgeführt wird, sowie der durch die Aktion (a) erreichte neue Zustand (s') berücksichtigt werden.

20. Verfahren nach einem der Ansprüche 14 bis 19, bei dem in dem graph-basierten Lernverfahren und/oder in dem bestärkenden Lernverfahren ähnliche Zustände (s, s') des technischen Systems in gemeinsame Cluster zusammengefasst werden.

21. Verfahren nach einem der Ansprüche 14 bis 20, bei dem ferner bei Erreichen von Zuständen (s, s') einer auf die gerade zu durchlaufenden Kategorie folgende Kategorie die nachfolgenden Aktionen (a) basierend auf der Rückführungsregel ausgewählt werden.

22. Verfahren nach einem der Ansprüche 14 bis 21, bei dem die Zustände (s, s') gemäß der Rückführungsregel so lange durchlaufen werden, bis ein Zustand der gerade zu durchlaufenden Kategorie erreicht ist.

23. Verfahren nach einem der Ansprüche 14 bis 22, bei dem das Verfahren derart initiiert wird, dass zunächst ohne Berücksichtigung der Sicherheitsfunktion (SF) die Zustände (s, s') gemäß der Rückführungsregel (BP) durchlaufen werden und dabei den Zuständen (s, s') die gleiche Kategorie zugeordnet wird, wobei die Zustände (s, s') solange durchlaufen werden, bis eine bestimmte Menge von Zuständen nicht mehr verlassen wird, und anschließend unter Berücksichtigung der Sicherheitsfunktion (SF) zu einem unbekannten, vormals noch nicht durchlaufenen Zustand (s, s') gegangen wird, wobei dieser Zustand (s, s') der darauf folgenden Kategorie zugeordnet wird.

24. Verfahren nach einem der vorhergehenden Ansprüche, wobei das Verfahren im Realbetrieb des technischen Systems eingesetzt wird.

25. Verfahren nach einem der Ansprüche 1 bis 23, wobei das Verfahren bei der Simulation des Betriebs des technischen Systems eingesetzt wird.

26. Verfahren nach einem der vorhergehenden Ansprüche, bei dem mit dem Verfahren die Zustände (s, s') einer Gasturbine exploriert werden.

27. Verfahren nach Anspruch 26, bei dem die Zustände der Gasturbine und/oder die den Zuständen (s, s') zugeordneten Aktionen (a) eine oder mehrere der folgenden Größen umfassen:

Gesamtleistung der Gasturbine; Kraftstoffzufuhr zur Gasturbine; ein oder mehrere Drucke und/oder Temperaturen in der Gasturbine oder in der Umgebung der Gasturbine; das Brummen der Gasturbine; Brennkammerbeschleunigungen in der Gasturbine;
einen oder mehrere Einstellparameter an der Gasturbine, insbesondere Ventileinstellungen und/oder Kraftstoffverhältnisse und/oder Einstellungen der Vorleitschaufeln.

28. Computerprogrammprodukt, welches einen auf einem maschinenlesbaren Träger gespeicherten Programmcode beinhaltet, wobei der Programmcode ein Verfahren nach einem der vorhergehenden Ansprüche durchführt, wenn er auf einem Rechner abläuft.

**Claims**

1. Method for computer-assisted exploration of states (s, s') of a technical system, in which

- Consecutive states (s, s') of the technical system are run by an action (a) which leads to a new state (s, s') being executed in a respective state (s, s') of the technical system;

**characterised in that**

- Before the execution of actions (a) which lead to unknown states (s, s') not previously run, a safety function (SF) is used to determine whether the respective action (a) is a permissible or impermissible action (a) in the technical system, with the action (a) only being executed if it is permissible;
- On reaching unknown states (s, s') the subsequent actions (a) will be selected based on a backup policy (BP) for returning the states (s, s') to known states (s, s').

2. Method according to claim 1, in which the impermissible actions (a) are characterised such that, on execution of an impermissible action (a), the technical system has a probability of one or a probability of greater than zero of going into a state (s, s') which leads to an undesired and/or incorrect operating state of the technical system directly after the execution of the impermissible action (a) or indirectly after the execution of further actions (a).

3. Method according to claim 1 or 2, in which further, on reaching states (s, s') of the technical system in which an action (a) to be executed is classified by the safety function (SF) as impermissible, the subsequent actions (a) will be selected based on the backup policy (BP).

4. Method according to one of the preceding claims, in which the actions (a) executed are respectively assigned a reward (r) as a function of the state (s) in which the action (a) is executed and the new state (s') reached by the action.

5. Method according to claim 4, in which an impermissible action (a) features a reward (r) which is smaller than a prespecified value.

6. Method according to claim 4 or 5, in which the safety function (SF) is learned based on the rewards (r) of the actions (a).

7. Method according to claim 6, in which the pairs consisting of state (s) and action (a) executed in the state (s) run are each assigned the minimum reward($r_{min}$) which after the execution of the action (a) and on subsequently running the backup policy (BP) occurs for an action (a), with the safety function (SF) being determined based on the minimum reward ($r_{min}$) and with the safety function establishing an impermissible action if the minimal reward ($r_{min}$) is smaller than a prespecified value.

8. Method according to claim 7, in which the safety function is determined with a function approximator which approximates the minimal rewards ($r_{min}$) based on a local extrapolation by the state (s, s') currently to be changed with an action (a).

9. Method according to claim 8, in which the function approximator carries out a local-linear and/or local-quadratic extrapolation.

10. Method according to one of the preceding claims, in which the backup policy is a policy prespecified for the technical system.

11. Method according to claim 10, in which the backup policy (BP) is realized by an existing adjuster of the technical system.

12. Method according to one of claims 4 to 9 or as claimed in claim 10 or 11 in combination with claim 4, in which the backup policy (BP) is determined with a reinforcement learning method, taking into account the rewards (r) of the actions (a).

13. Method according to claim 12 in which the reinforcement learning method is based on an optimality criterion in accordance with which the minimum of the expected value of all future rewards (r) is maximised.

14. Method according to one of the preceding claims, in which, when the states (s, s') of the technical system are run, the states (s, s') are assigned consecutive categories such that

    i) If the states (s, s') are changed based on the backup policy (BP) an unknown, previously not yet run state (s, s') reached by an action (a) is assigned the category which the state (s, s') is assigned before the execution of the action (a);
    ii In all other cases an unknown, previously not yet run state (s, s') reached by an action (a) is assigned a category which follows the category which the state (s, s') is assigned before the execution of the action (a).

15. Method according to claim 14, in which the states (s, s') are run according to categories such that in one category all possible actions (a) to be executed are first explored and subsequently the transition is made to the next category.

16. Method according to claim 15, in which the states (s, s') of a category are run with a graph-based pathfinder method in which during the running of the states (s, s') a graph is constructed of which the nodes correspond to the run states (s, s') and of which the edges correspond to the executed actions (a) and in which for each node the category of the corresponding state (s, s') is stored, wherein on reaching a state (s, s'), in which all possible actions(a) have already been explored, a search is made in the graph for a path to a state (s, s') in the same category, in which actions (a) can still be explored, and on finding such a path to the state (s, s') this path is taken.

17. Method according to claim 16, in which in the event of no path to a state (s, s') in the same category being found in which actions (a) can still be executed, the states (s, s') of the following category are run.

18. Method according to one of claims 15 to 17, in which the states (s, s') of a category are run with a reinforcement learning method based on a reward function, whereby in accordance with the reward function an action (a) is assigned a reward when it leads to a state (s, s') in the category just run in which the exploration of a least one action (a) is possible.

19. Method according to claim 18, in which, in the reinforcement learning method, an action selection rule is updated after running a predetermined number of states (s, s'), whereby the newly added actions and the respective state (s) in which the respective newly added action is executed as well as the new state (s') reached by the action (a) are taken into account in the updating.

20. Method according to one of claims 14 to 19, in which, in the graph-based learning method and/or in the reinforcement learning method, similar states (s, s') of the technical system are grouped into common clusters.

21. Method according to one of claims 14 to 20, in which further, on reaching states (s, s') of a category following the category currently to be run, the subsequent actions (a) are selected based on the backup policy.

22. Method according to one of claims 14 to 21, in which the states (s, s') are run in accordance with the backup policy until such time as a state of the category currently to be run is reached.

23. Method according to one of claims 14 to 22, in which the method is initiated such that the states (s, s') are initially run in accordance with the backup policy (BP) without taking account of the safety function (SF) and in doing so the states (s, s') are assigned the same category, whereby the states (s, s') are run until such time as a specific quantity of states is no longer left and subsequently taking into account the safety function (SF) the system goes to an unknown, previously not yet run state (s, s'), whereby this state (s, s') is assigned the following category.

24. Method according to one of the preceding claims, wherein the method is employed in real operation of the technical system.

25. Method according to one of claims 1 to 23, wherein the method is employed in the simulation of the operation of the technical system.

26. Method according to one of the preceding claims, in which the states (s, s') of a gas turbine are explored with the method.

27. Method according to claim 26, in which the states of the gas turbine and/or the actions (a) assigned to the states (s, s') include one or more of the following variables:

Overall power of the gas turbine; fuel supplied to the gas turbine; one or more pressures and/or temperatures in the gas turbine or in the environment of the gas turbine; the humming of the gas turbine; combustion chamber accelerations in the gas turbine; one or more setting parameters on the gas turbine, especially valve settings and/or fuel ratios and/or inlet guide valve settings.

28. A computer program product with program code stored on a machine-readable carrier, wherein the program code executes a method according to one of the preceding claims when the program runs on a computer.

**Revendications**

1. Procédé pour l'exploration assistée par ordinateur d'états (s, s') d'un système technique, dans lequel:

- on parcourt des états successifs (s, s') du système technique en exécutant, dans un état respectif (s, s') du système technique, une action (a) qui conduit à un nouvel état (s, s') ;

**caractérisé en ce que**

- avant d'exécuter des actions (a) qui conduisent à des états (s, s') inconnus n'ayant pas encore été parcourus auparavant, on détermine, à l'aide d'une fonction de sécurité (SF), si l'action respective (a) est une action (a) autorisée ou interdite dans le système technique, l'action (a) n'étant exécutée que si elle est autorisée; et
- lorsque des états (s, s') inconnus sont atteints, les actions suivantes (a) sont sélectionnées en se basant sur une règle de rétroaction (BP) pour ramener les états (s, s') à des états connus (s, s').

2. Procédé selon la revendication 1, dans lequel les actions (a) interdites sont ainsi caractérisées que, lors de l'exécution d'une action (a) interdite, le système technique passe avec une probabilité de un ou avec une probabilité supérieure à zéro dans un état (s, s') qui conduit à un état de fonctionnement indésirable et/ou défectueux du système technique directement après l'exécution de l'action (a) interdite ou indirectement après l'exécution d'autres actions (a).

3. Procédé selon la revendication 1 ou 2, dans lequel, en outre, lorsqu'on atteint des états (s, s') du système technique dans lesquels une action (a) à exécuter est classée comme interdite selon la fonction de sécurité (SF), les actions (a) suivantes sont sélectionnées en se basant sur la règle de rétroaction (BP).

4. Procédé selon l'une des revendications précédentes, dans lequel une pondération (r) est associée aux actions (a) exécutées à chaque fois en fonction de l'état (s) dans lequel l'action (a) est exécutée et du nouvel état (s') atteint suite à l'action.

5. Procédé selon la revendication 4, dans lequel une action (a) interdite a une pondération (r) qui est inférieure à une valeur prédéterminée.

6. Procédé selon la revendication 4 ou 5, dans lequel la fonction de sécurité (SF) est apprise en se basant sur les pondérations (r) des actions (a).

**7.** Procédé selon la revendication 6, dans lequel on affecte à chaque fois aux paires parcourues composées d'un état (s) et d'une action (a) exécutée dans l'état (s) la pondération minimale ($r_{min}$) qui se présente après l'exécution de l'action (a) et lors du déroulement de la règle de rétroaction (BP) qui s'ensuit pour une action (a), la fonction de sécurité (SF) étant déterminée en se basant sur la pondération minimale ($r_{min}$) et la fonction de sécurité (SF) diagnostiquant une action interdite lorsque la pondération minimale ($r_{min}$) est inférieure à une valeur prédéterminée.

**8.** Procédé selon la revendication 7, dans lequel la fonction de sécurité (SF) est déterminée avec un approximateur de fonction qui donne une approximation des pondérations minimales ($r_{min}$) en se basant sur une extrapolation locale autour de l'état (s, s') qui doit justement être modifié par une action (a).

**9.** Procédé selon la revendication 8, dans lequel l'approximateur de fonction exécute une extrapolation linéaire locale et/ou quadratique locale.

**10.** Procédé selon l'une des revendications précédentes, dans lequel la règle de rétroaction (BP) est une règle prédéfinie pour le système technique.

**11.** Procédé selon la revendication 10, dans lequel la règle de rétroaction (BP) est réalisée grâce à un régulateur existant du système technique.

**12.** Procédé selon l'une des revendications 4 à 9 ou selon la revendication 10 ou 11 en combinaison avec la revendication 4, dans lequel la règle de rétroaction (BP) est déterminée grâce à un procédé d'apprentissage corroboratif prenant en compte les pondérations (r) des actions (a).

**13.** Procédé selon la revendication 12, dans lequel le procédé d'apprentissage corroboratif est basé sur un critère d'optimalité selon lequel le minimum de la valeur escomptée de toutes les pondérations (r) futures est maximisé.

**14.** Procédé selon l'une des revendications précédentes, des catégories successives étant attribuées aux états (s, s') du système technique, lors du parcours de ces états (s, s'), de telle sorte que

i) dans le cas où les états (s, s') sont modifiés en se basant sur la règle de rétroaction (BP), on attribue à un état (s, s') inconnu, n'ayant pas encore été parcouru auparavant, atteint suite à l'action (a) la catégorie qui est attribuée à l'état (s, s') avant l'exécution de l'action (a) ;

ii) dans tous les autres cas, on attribue à un état (s, s') inconnu, n'ayant pas encore été parcouru auparavant, atteint suite à une action une catégorie qui suit la catégorie qui est attribuée à l'état (s, s') avant l'exécution de l'action (a).

**15.** Procédé selon la revendication 14, dans lequel les états (s, s') sont parcourus par catégorie de telle sorte que toutes les actions (a) qu'il est possible d'exécuter sont explorées en premier dans une catégorie et l'on passe ensuite à la catégorie suivante.

**16.** Procédé selon la revendication 15, dans lequel les états (s, s') d'une catégorie sont parcourus à l'aide d'un procédé de recherche de chemin basé sur un graphe, dans lequel, pendant le parcours des états (s, s'), un graphe est construit, dont les noeuds correspondent aux états (s, s') parcourus et dont les arêtes correspondent aux actions (a) exécutées et dans lequel, pour chaque noeud, la catégorie de l'état (s, s') correspondant est enregistrée, un chemin menant à un état (s, s') de la même catégorie étant recherché lorsque l'on atteint un état (s, s') dans lequel toutes les actions (a) possibles ont déjà été explorées, état de la même catégorie dans lequel des actions (a) peuvent encore être explorées, et, lorsqu'un tel chemin menant à l'état (s, s') est trouvé, ce chemin étant emprunté.

**17.** Procédé selon la revendication 16, dans lequel, dans le cas où on ne trouve aucun chemin menant à un état (s, s') de la même catégorie dans lequel des actions (a) peuvent encore être exécutées, les états (s, s') de la catégorie suivante sont parcourus.

**18.** Procédé selon l'une des revendications 15 à 17, dans lequel on parcourt les états (s, s') d'une catégorie avec un procédé d'apprentissage corroboratif se basant sur une fonction de récompense, une récompense étant attribuée à une action (a), selon la fonction de récompense, lorsque cette action conduit à un état (s, s') de la catégorie en train d'être parcourue dans lequel l'exploration d'au moins une action (a) est possible.

**19.** Procédé selon la revendication 18, dans lequel, dans le procédé d'apprentissage corroboratif, une règle de sélection d'action est actualisée après le parcours d'un nombre d'états (s, s') prédéterminé, les nouvelles actions supplémentaires et l'état respectif (s) dans lequel la nouvelle action supplémentaire respective est exécutée, ainsi que le nouvel état (s') atteint suite à l'action (a), étant pris en compte lors de l'actualisation.

**20.** Procédé selon l'une des revendications 14 à 19, dans lequel, dans le procédé d'apprentissage basé sur un graphe et/ou dans le procédé d'apprentissage corroboratif, des états semblables (s, s') du système technique sont rassemblés en clusters communs.

**21.** Procédé selon l'une des revendications 14 à 20, dans lequel, en outre, lorsque des états (s, s') d'une catégorie suivant la catégorie en train d'être parcourue sont atteints, les actions (a) suivantes sont sélectionnés en se basant sur la règle de rétroaction.

**22.** Procédé selon l'une des revendications 14 à 21, dans lequel les états (s, s') sont parcourus, selon la règle de rétroaction, aussi longtemps qu'un état de la catégorie en train d'être parcourue est atteint.

**23.** Procédé selon l'une des revendications 14 à 22, dans lequel le procédé est initié de telle sorte que les états (s, s') sont d'abord parcourus selon la règle de rétroaction (BP) d'abord sans tenir compte de la fonction de sécurité (SF) et la même catégorie est attribuée aux états (s, s') pendant ce parcours, les états (s, s') étant parcourus jusqu'à ce que l'on ne quitte plus un ensemble d'états déterminé, et on passe ensuite, en tenant compte de la fonction de sécurité (SF), à un état (s, s') inconnu n'ayant pas encore été parcouru auparavant, cet état (s, s') étant associé à la catégorie suivante.

**24.** Procédé selon l'une des revendications précédentes, le procédé étant utilisé en mode de fonctionnement réel du système technique.

**25.** Procédé selon l'une des revendications 1 à 23, le procédé étant utilisé lors de la simulation du fonctionnement du système technique.

**26.** Procédé selon l'une des revendications précédentes, dans lequel, grâce au procédé, on explore les états (s, s') d'une turbine à gaz.

**27.** Procédé selon la revendication 26, dans lequel les états de la turbine à gaz et/ou les actions (a) associées aux états (s, s') comprennent une ou plusieurs des grandeurs suivantes : puissance totale de la turbine à gaz ; alimentation en combustible de la turbine à gaz ; une ou plusieurs pressions et/ou température dans la turbine à gaz ou dans l'environnement de la turbine à gaz ; le ronflement de la turbine à gaz ; les emballements de la chambre de combustion de la turbine à gaz ; un ou plusieurs paramètres de réglage de la turbine à gaz, notamment les réglages des soupapes et/ou les rapports de combustibles et/ou les réglages des aubes directrices.

**28.** Produit de programme informatique, qui comporte un code de programme enregistré sur un support pouvant être lu par une machine, le code de programme exécutant un procédé selon l'une des revendications précédentes lorsqu'il est lu sur un ordinateur.

FIG 1

FIG 2

FIG 3

## FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007001025

**In der Beschreibung aufgeführte Nicht-Patentliteratur**

- **ANTON MAXIMILIAN SCHAEFER et al.** A Neural Reinforcement Learning Approach to Gas Turbine Control. *NEURAL NETWORKS, 2007. IJCNN 2007. INTERNATIONAL JOINT CONFERENCE ON, IEEE, Piscataway, NJ, USA,* 01. August 2007, 1691-1696